# EUROPÄISCHE PATENTANMELDUNG

(11) **EP 1 270 986 A2**
(43) Veröffentlichungstag der Anmeldung: **02.01.2003**
(21) Anmeldenummer: 02000845.4
(22) Anmeldetag: 15.01.2002
(51) Int. Cl.: F16F 1/387

(54) **Aggregatelager in Buchsenform**

(30) Priorität: 27.06.2001 DE 10131105
(71) Anmelder: Carl Freudenberg KG, 69469 Weinheim (DE)
(72) Erfinder: Hettler, Werner, 68309 Mannheim (DE)

(57) **Zusammenfassung**

Aggregatelager (1) in Buchsenform mit einem Außenring (2) und einem Elastomerüberzug (3) und einem inneren Stützteil (4) sowie dazwischen angeordneten Gummifedern (5, 6), wobei axiale Durchdringungen (8, 9) zwischen dem Außenring (2) und dem in Richtung der Hauptlast (10) liegende Anschlagpuffer (7) vorgesehen sind, wobei der in Hauptlastrichtung (10) liegende Anschlagpuffer (7) und der innere Elastomerüberzug (3) des Außenrings (2) durch mindestens einen in axialer Richtung des Lagers (1) angeordneten und als Sollreißstelle ausgebildeten Steg (12) vor der ersten Inanspruchnahme des Lagers miteinander verbunden sind, um einen möglichst frühen Progressionsbeginn in Zugrichtung zu erreichen.

## Beschreibung

### Technisches Gebiet

Die Erfindung betrifft ein Aggregatelager in Buchsenform mit einem Außenring mit einem Elastomerüberzug und einem inneren Stützteil sowie dazwischen angeordneten Gummifedern.

Bei den bekannten Aggregatelagern dieser Art werden die Gummifedern in den Zwischenraum zwischen Außenring und Stützteil einvulkanisiert. Diese Verfahrensweise hat die Eigenschaft, dass bei der sich an diese Vulkanisierung anschließende Abkühlung des Lagers eine Schrumpfung der Gummifedern eintritt, welche eine Zwischenraumvergrößerung zur Folge hat, die sich bezüglich der gewünschten Lagercharakteristik nachteilig auswirken kann.

### Stand der Technik

Um den genannten Nachteil zu vermeiden, ist durch die DE 38 40 176 C2 bekannt geworden, in den dadurch vergrößerten Spalt einen Zusatzkörper einzufügen, durch den eine elastische Vorspannung erreicht wird. Lager, deren Außenring auf ihrer Außenseite ohne einen Elastomerüberzug ausgeführt sind, können problemlos beim Einbau in eine entsprechende Halterung kalibriert werden. Die Kalibrierung erlaubt auch das Aggregatelager ohne die genannten Zusatzkörper auszubilden und in die Halterung einzusetzen. Dabei wird der Spalt ganz oder zumindest teilweise eliminiert.

Bei Lagern deren Außenring mit einem Elastomerüberzug versehen ist, lässt sich diese Kalibrierung jedoch nur sehr schwer durchführen. Andererseits hat der Elastomerüberzug den Vorteil, dass der relativ teure Korrosionsschutz für den metallischen Außenring entfällt. Meist werden Gummifedern mit einer axialen Durchdringung ausgeführt, die jedoch wieder den Nachteil hat, dass bei der Ausfederung die axiale Durchdringung (und das Schwundmaß) überbrückt werden müssen, was der Federcharakteristik laut Kundenforderung entgegenstehen kann.

### Darstellung der Erfindung

Der Erfindung liegt die Aufgabe zugrunde, ein Aggregatelager zu schaffen, das kostengünstig herzustellen ist und bei dem trotz einer vorhandenen axialen Durchdringung und Schwundspalt der Progressionsverlauf der Federung früh einsetzt.

Die Lösung der gestellten Aufgabe erfolgt bei einem Aggregatelager in Buchsenform mit einem Außenring mit einem Elastomerüberzug und einem inneren Stützteil sowie dazwischen angeordneten Gummifedern, wobei zum Erreichen der gewünschten Lagercharakteristik axiale Durchdringungen zwischen dem Außenring und dem die Hauptlast tragenden inneren Stützteil oder Anschlagpuffer vorgesehen sind erfindungsgemäß dadurch, dass der in Hauptlastrichtung liegende Anschlagpuffer und der innere Elastomerüberzug des Außenrings durch mindestens einen in axialer Richtung des Lagers angeordneten und als Sollreißstelle ausgebildeten Steg vor der ersten Inanspruchnahme des Lagers miteinander verbunden sind.

Diese Ausgestaltung des Lagers erlaubt die Herstellung eines Lagers mit einer axialen Durchdringung, so dass die durch die Schwindung auftretenden Nachteile wegfallen. Zwischen dem Außenring des Lagers und dem Anschlagpuffer besteht an der axialen Durchdringung bei dem fertigen Lager ein Spalt, dessen Größe sich aus dem Schwundmaß der Gummifedern und dem durch die axiale Durchdringung gebildeten Freiweg ergibt. Der zwischen dem inneren Stützteil bzw. Anschlagpuffer und dem Außenring belassene Steg kann den bei der Schwindung auftretenden Kräften nicht widerstehen. Bei der ersten Inbetriebnahme des Lagers zerreißt der Steg an der Sollreißstelle. Die am Außenring bzw. am Anschlagpuffer verbliebenen Abschnitte des durchrissenen Stegs wirken sich überraschenderweise äußerst günstig auf die Progression der Federung aus. Bei der Ausfederung findet ein früherer Anschlag statt, da zunächst die abgerissenen Enden des Stegs zur gegenseitigen Anlage kommen. Diese ergeben je nach Ausführung eine deutliche Einflussnahme auf das Federverhalten des Lagers.

### Ausführung der Erfindung

In dem in der Zeichnung gezeigten Ausführungsbeispiel wird die Erfindung näher erläutert.

Es zeigt:
- Fig. 1: ein Aggregatelager im Querschnitt und
- Fig. 2: das Aggregatelager im Längsschnitt.

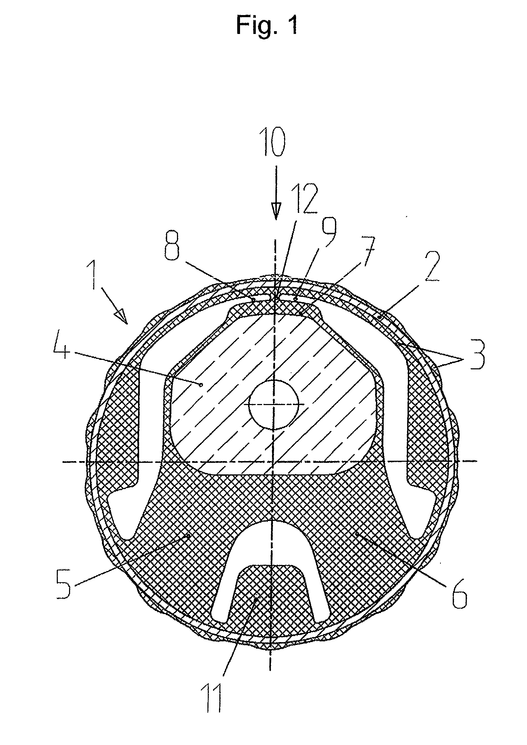

Das in der Fig. 1 gezeigte Aggregatelager 1 besteht im Wesentlichen aus dem Außenring 2, der mit einem Elastomerüberzug 3 versehen ist, dem inneren Stützteil 4 sowie den Gummifedern 5 und 6. Am oberen Teil des Stützteils 4 ist der Anschlagpuffer 7 vorhanden, der stummelartig ausgebildet ist. Zwischen dem Anschlagpuffer 7 und dem Außenring 2 befinden sich die Axialdurchdringungen 8 und 9. Der Anschlagpuffer 7 liegt in Richtung der Hauptlast 10, welche durch die Pfeile angezeigt ist. Die Abstützung des Lagers wird in der Hauptsache von den V-artig ausgebildeten Federn 5 und 6 übernommen. Zwischen den Federn 5 und 6 liegt ein Anschlagpuffer 11.

Zwischen den beiden Axialdurchdringungen 8 und 9 wird bei der Fertigung des Lagers der Steg 12 belassen, welcher den Elastomerüberzug 3 mit dem Anschlagpuffer 7 miteinander verbindet. Das Spaltmaß der Durchdringungen 8 und 9 ist in der Regel fertigungstechnisch bedingt. Es können auch mehrere Stege mit ihren Sollbruchstellen angeordnet werden.

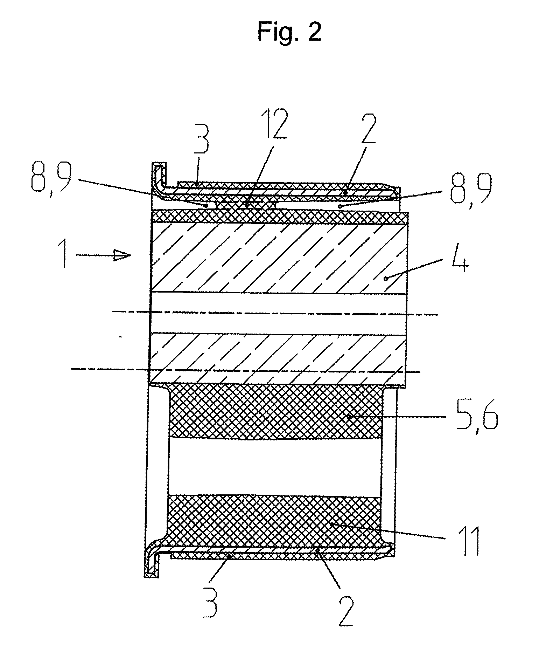

In der Fig. 2 ist das Lager 1 im Längsschnitt gezeigt. Der Längsschnitt entspricht einem Schnitt in Richtung der Hauptlast 10. Sichtbar ist hier die Länge des Steges 12, die im Ausführungsbeispiel kürzer ist als die Länge des Lagers 1. Der Außenring 2 hat auf seiner linken Seite eine flanschartige Ausbildung und ist vollständig von dem Elastomerüberzug 3 eingefasst. Das Stützteil 4 ist aus Metall und stützt sich auf den Federbeinen 5 und 6 ab. Beim ersten Einfedervorgang des Lagers ist der vom Stützteil 4 zurückgelegte Weg so groß, dass der Steg 12 zerreißt. Der zerrissene Steg 12 kommt mit seinen Teilen jedoch wieder zur Wirksamkeit, wenn das Lager 1 ausfedert und das Stützteil 4 mit Anschlagpuffer sich bis zum Anschlag an zunächst die Stegteile und dann den Außenring 2 nach oben bewegt.

## Patentansprüche

1. Aggregatelager (1) in Buchsenform mit einem Außenring (2) und einem Elastomerüberzug (3) und einem inneren Stützteil (4) sowie dazwischen angeordneten Gummifedern (5, 6), wobei zum Erreichen der gewünschten Federcharakteristik axiale Durchdringungen (8, 9) zwischen dem Außenring (2) und der in Richtung der Hauptlast (10) liegenden Anschlagpuffer (7) vorgesehen sind, **dadurch gekennzeichnet, dass** der in Hauptlastrichtung (10) liegende Anschlagpuffer (7) und der innere Elastomerüberzug (3) des Außenrings (2) durch mindestens einen in axialer Richtung des Lagers (1) angeordneten und als Sollreißstelle ausgebildeten Steg (12) vor der ersten Inanspruchnahme des Lagers miteinander verbunden sind.
